Europäisches Patentamt

European Patent Office

Office européen des brevets

(11) Numéro de publication : **0 330 565 B1**

(12)  **FASCICULE DE BREVET EUROPEEN**

(45) Date de publication du fascicule du brevet :
09.10.91 Bulletin 91/41

(51) Int. Cl.$^5$ : **B23K 26/14**

(21) Numéro de dépôt : **89400489.4**

(22) Date de dépôt : **22.02.89**

(54) **Appareil de coupe laser muni d'un dispositif d'évacuation des fumées.**

(30) Priorité : **24.02.88 FR 8802256**

(43) Date de publication de la demande :
**30.08.89 Bulletin 89/35**

(45) Mention de la délivrance du brevet :
**09.10.91 Bulletin 91/41**

(84) Etats contractants désignés :
**AT DE ES FR GB GR IT NL**

(56) Documents cités :
**GB-A- 2 048 785**
**US-A- 3 866 398**
**US-A- 4 550 241**

(73) Titulaire : **LECTRA SYSTEMES S.A.**
**Marticot**
**F-33610 Cestas Bourg (FR)**

(72) Inventeur : **Etcheparre, Jean**
**67 Quai des Chartrons**
**F-33000 Bordeaux (FR)**
Inventeur : **Etcheparre, Bernard**
**67 Quai des Chartrons**
**F-33000 Bordeaux (FR)**

(74) Mandataire : **Hasenrader, Hubert et al**
**Cabinet BEAU DE LOMENIE 55, rue**
**d'Amsterdam**
**F-75008 Paris (FR)**

EP 0 330 565 B1

## Description

La présente invention concerne un appareil de coupe laser muni d'un dispositif d'évacuation des fumées.

Il est connu depuis longtemps d'utiliser le laser comme outil de coupe plus particulièrement pour les matériaux en feuilles. Pour cela, on dispose d'une source laser générant un faisceau lumineux, lequel est dirigé au moyen de miroirs vers la zone de coupe. Avant qu'il n'atteigne le plan de coupe, on intercale sur son trajet une lentille de focalisation dont le rôle est de concentrer le faisceau lumineux en une tache de très petit diamètre, laquelle fournit une densité d'énergie très élevée. On peut ainsi découper des matières très différentes les unes des autres pourvu que les épaisseurs ne soient pas trop importantes.

La coupe est obtenue par fusion de la matière à l'endroit où le faisceau est focalisé. Cette fusion, en fonction de la nature de la matière, peut générer de la fumée dont les inconvénients sont multiples : formation d'un écran devant le faisceau et ainsi absorption de puissance, pollution de l'environnement (odeur et toxicité éventuelle), pollution le long de la ligne de coupe (traces noirâtres inesthétiques).

Pour limiter ces inconvénients, on a généralement recourt à des buses d'aspiration consistant en une coupelle enveloppant le faisceau entre la lentille de focalisation et le plan de coupe et dans laquelle on crée une légère dépression (voir par exemple GB-A-2048785). Si ce procédé peut donner satisfaction avec des déplacements relatifs buse/matière peu rapides, il n'en est plus de même lorsque l'on veut couper à vitesse élevée. C'est le cas par exemple pour la découpe de tissus, généralement fins, et pour lesquels on peut découper jusqu'à 100 m/min. A ces vitesses-là, la fumée dégagée n'a pas le temps d'être aspirée par la buse et elle reste au contact de la matière. Une amélioration consiste alors à augmenter la dépression à l'intérieur de la buse. A ce moment-là, il est courant d'aspirer non seulement la fumée mais aussi la matière. Plus grave, les toutes petites pièces découpées sont décollées du support de coupe et peuvent s'enflammer spontanément en passant au travers du faisceau défocalisé, ceci pouvant induire évidemment de graves préjudices.

L'invention présentée ci-après concerne un dispositif d'aspiration des fumées éliminant tous les inconvénients cités ci-dessus.

L'idée centrale du dispositif selon l'invention est qu'il convient d'organiser convenablement les circulations de gaz (air) au niveau de la zone de découpe.

L'appareil de coupe à laser utilisé est en lui-même connu ; il peut être décrit schématiquement comme comportant un émetteur de rayonnement laser, une lentille de focalisation, dudit rayonnement, fixée dans un fourreau coulissant réglable et une buse tronconique prolongeant ledit fourreau du côté du matériau à découper et dont la petite extrémité est située au voisinage immédiat dudit matériau à découper.

Un tel appareil comporte un tube permettant l'injection de gaz comprimé dans l'espace délimité par la lentille de focalisation, le fourreau et la buse tronconique et un dispositif d'évacuation des fumées qui est essentiellement constitué par une hotte (appelée ci-après éjecteur) ouverte du côté du matériau à découper et fixée sur ledit fourreau coulissant, dans laquelle sont agencés les éléments assurant une circulation et une évacuation convenables d'un gaz (air).

Ces éléments, qui sont caractéristiques, de l'invention sont constitués par un éjecteur qui comporte sur sa face ouverte située en regard du matériau à découper des ouvertures, permettant l'injection de gaz comprimé, de préférence de l'air, dont les axes sont convergents, et qui comporte également en sa partie supérieure une canalisation d'évacuation des gaz.

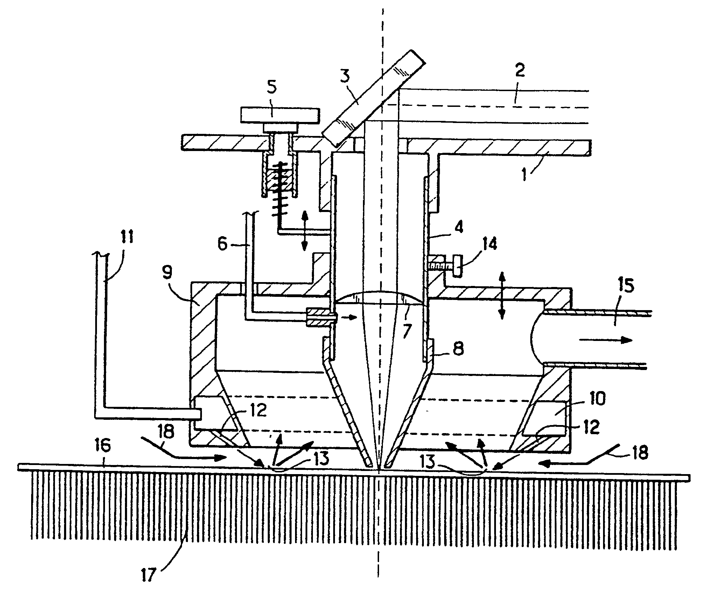

L'invention sera mieux comprise en se référant à l'exemple ci-après, exemple qui est illustré par la figure unique représentant une coupe simplifiée de l'appareil à découpe et du dispositif d'évacuation des fumées.

La tête de coupe est fixée sur la machine par l'intermédiaire du support (1). Ce dernier peut être fixe, auquel cas c'est la matière qui se déplace en dessous. Il peut aussi faire partie d'un chariot mobile se déplaçant au-dessus de la matière, cette dernière restant fixe.

Le faisceau laser (2) arrive parallèlement au plan de coupe (17) et est renvoyé perpendiculairement à ce dernier par un miroir (3) incliné à 45 degrés. Le faisceau ainsi dévié passe au travers d'une lentille de focalisation (7) et se trouve focalisé juste au niveau du matériau à une distance correspondant à la focale de la lentille. Cette lentille (7) est fixée dans un fourreau (4) pouvant coulisser par rapport au support (1). Le déplacement et le maintien en position du fourreau (4) sont ajustés par un dispositif vis/écrou (5). On peut ainsi régler très précisément la hauteur de la lentille par rapport au matériau (16) reposant sur le plan de coupe (17) et obtenir les meilleures conditions de coupe. Le fourreau (4) est prolongé à son extrémité inférieure par une buse tronconique (8) dont le trou en extrémité est très proche du point de focalisation. On injecte un gaz comprimé à l'intérieur du volume délimité par la face inférieure de la lentille, la partie basse du fourreau (4) et la buse (8) grâce à un tube (6). Le gaz est généralement de l'air comprimé mais ce peut être aussi de l'oxygène ou un gaz neutre ou tout autre gaz favorisant les conditions de coupe. Le gaz injecté à cet endroit a plusieurs rôles: d'une part, il refroidit la face inférieure de la lentille (7), d'autre part, il protège la lentille contre les pollutions extérieures et, enfin, il empêche la formation d'une flamme créée par l'échauffement de la fumée (constituée

2

de très fines particules de la matière découpée) passant au travers du faisceau. Ce dernier point, outre l'élimination du danger de brûlure, permet d'avoir une coupe très propre. Il est avantageux de pouvoir régler la position de la buse (8) par rapport au fourreau (4) en fonction des épaisseurs variables des matériaux.

Une pièce (9), que l'on dénommera par la suite "éjecteur", est utilisée pour l'évacuation des fumées. Elle est constituée, d'une part, d'une cavité délimitée par une enveloppe cylindrique. D'autre part, dans sa partie inférieure, est aménagé un conduit torique (10) relié à une tubulure d'air comprimé (11). Sur la périphérie inférieure du tore (10) sont percés plusieurs trous (12) dont les axes sont convergents. Le point de convergence de ces axes se situe sur l'axe optique de lentille, en dessous du plan de focalisation (c'est-à-dire du matériau découpé). Les différents jets d'air, créés par le passage de l'air comprimé au travers de ces trous, sont réfléchis (13) par le matériau à découper vers le centre de l'éjecteur (9). Le centre de l'éjecteur se trouve ainsi en surpression par rapport à l'extérieur. Une canalisation (15) située dans la partie supérieure de l'éjecteur (9) permet l'évacuation de cette surpression en créant une circulation d'air importante. Les fumées créées par la coupe du matériau sont ainsi entraînées par le courant d'air et évacuées dans la canalisation (15). L'inclinaison des jets a pour autre effet de créer une légère dépression sous la périphérie inférieure de l'éjecteur, créant une autre circulation d'air (18) allant de l'extérieur vers l'intérieur de l'éjecteur, en passant en dessous de l'éjecteur. Ceci est assimilable à l'effet Venturi. Il se crée une barrière infranchissable pour les fumées qui ne peuvent alors pas sortir à cet endroit.

De préférence, l'éjecteur (9) sera monté librement coulissant sur le fourreau (4) de façon à ajuster la distance séparant l'éjecteur du matériau à découper. Une vis de blocage (14) permet le maitien en position de l'éjecteur (9) à cet effet.

Il appartiendra au technicien d'ajuster convenablement, entre eux, les divers éléments constitutifs du dispositif d'évacuation des fumées de façon à aboutir à un fonctionnement optimum. Les éléments influant sur le fonctionnement sont les suivants : le diamètre sur lequel sont répartis les trous inclinés, l'angle d'inclinaison des trous, le diamètre des trous, le nombre de trous, la distance entre la base de l'éjecteur et le matériau à découper, la pression de l'air comprimé, et enfin le diamètre du tube d'évacuation. A titre d'exemple, voici des valeurs typiques donnant un fonctionnement correct :

```
- φ de perçage des trous.............................  80 mm
- Angle d'inclinaison des trous (par rapport
  au plan de coupe)...............................  30°
- φ des trous......................................   2 mm
- Nombre de trous..................................  12
- Distance entre éjecteur et matériau découpé........  10 mm
- Pression de l'air comprimé.......................   4 bars
- Diamètre du tube d'évacuation....................  30 mm
```

Les valeurs peuvent être différentes mais certaines doivent évoluer en même temps. Par exemple, si on augmente la distance entre l'éjecteur et le matériau, il faut augmenter le diamètre de perçage des trous et augmenter la pression de l'air comprimé. Cette même distance éjecteur/matériau évoluera si on change le nombre de trous ou leur diamètre, et ainsi de suite. Pour un ensemble de valeurs assurant un bon fonctionnement, la variation d'une seule de ces valeurs compromet le résultat. Le seul paramètre n'influant que très peu sur le comportement est la forme intérieure de l'éjecteur. Généralement, ce sera une cavité cylindrique ou cylindrique/tronconique. L'important est de ne pas créer de perturbation dans le trajet de l'air et de limiter au maximum les pertes de charge. Si le tube d'évacuation doit être prolongé par un tube de grande longueur, il peut être nécessaire d'associer un petit aspirateur pour vaincre les pertes de charge du tube de prolongation.

Un autre avantage de l'invention réside en son action de placage des pièces découpées sur le support de coupe. Pour les matières très légères, on évite ainsi l'aspiration des pièces dans l'éjecteur.

Enfin, un dernier aspect intéressant est l'absence totale d'odeur lors de la coupe de matériaux particuliers tels que cuir, laine, matières plastiques lesquels matériaux dégagent généralement une odeur nauséabonde lorsqu'ils sont brûlés. Ces odeurs sont entraînées avec les fumées.

**Revendications**

1. Appareil de coupe laser comportant un émetteur de rayonnement laser, une lentille de focalisation (7) fixée dans un fourreau coulissant (4) réglable, ledit fourreau étant prolongé, du côté du matériau à découper (16) par une buse tronconique (8) dont la petite extrémité est au voisinage immédiat dudit matériau à découper, ledit appareil comportant un tube (6) d'arrivée de gaz comprimé débouchant à l'intérieur de l'espace délimité par ladite lentille de focalisation (7), ledit fourreau (4) et ladite buse (8) et, un dispositif d'évacuation des fumées constitué par une hotte (9) — appelée éjecteur — ouverte du côté du matériau à découper et fixée sur ledit fourreau coulissant (4), le dispositif étant caractérisé en ce que ledit éjecteur (9) comporte, sur son pourtour et sur sa face ouverte située en regard du matériau à découper, des ouvertures (12) permettant l'injection de gaz comprimé, de préférence de l'air, selon des axes convergents et dans sa partie supérieure une canalisation (15) d'évacuation des gaz.

**Claims**

1. Laser cutting apparatus comprising a laser radiation emitter, a focussing lens (7) fixed in an adjustable sliding sleeve (4), said sleeve being extended, on the side facing the material to be cut (16), by a truncated nozzle (8) of which the small end is in the immediate vicinity of said material to be cut, said apparatus comprising a compressed air supply pipe (6) issuing inside the space defined by said focussing lens (7), said sleeve (4) and said nozzle (8) and, a gas-evacuating device constituted by a hood (9) — called ejector — open on the side facing the material to be cut and fixed on said sliding sleeve (4), the device being characterized in that said ejector (9) comprises, on its periphery and on its open face lying opposite the material to be cut, openings (12) allowing the injection of compressed gas, preferably air, along convergent axes and, in its upper part, a pipe (15) for evacuating the gases.

**Patentansprüche**

1. Laserschneideapparat, umfassend einen Sender für einen Laserstrahl, eine Fokussierlinse (7), die in einem verstellbar verschieblichen Tubus (4) befestigt ist, wobei der Tubus auf der dem zu schneidenden Material (16) zugewandten Seite durch eine konische Düse (8) verlängert ist, deren kleines Ende in unmittelbarer Nachbarschaft des zu schneidenden Materials liegt, wobei der Apparat ein Einlaßrohr (6) für komprimiertes Gas aufweist, das ins Innere des Raumes mündet, der durch die Fokussierlinse (7) den Tubus (4) und die Düse (8) begrenzt wird und eine Absaugvorrichtung für Dämpfe, bestehend aus einer Hutze (9) — genannt Ejektor — die zu dem zu schneidenden Material hin geöffnet ist und die auf dem verschieblichen Tubus (7) befestigt ist, die Vorrichtung ist dadurch gekennzeichnet, daß der Ejektor (9) entlang seines Umfangs und auf seiner offenen Seite, die gegenüber dem zu schneidenden Material angeordnet ist, Öffnungen (12) aufweist, die das Einblasen von komprimiertem Gas, vorzugsweise von Luft, entlang konvergierender Achsen erlauben, und daß sie in ihrem oberen Teil eine Gasabsaugvorrichtung (15) aufweist.